# EUROPEAN PATENT APPLICATION

(11) **EP 2 752 227 A1**
(43) Date of publication of application: **09.07.2014**
(21) Application number: 12198412.4
(22) Date of filing: 20.12.2012
(51) Int. Cl.: A63F 13/20, A63F 3/00

(54) **A mobile game board**

(71) Applicant: Cartamundi Turnhout N.V., 2300 Turnhout (BE)
(72) Inventor: van Haaften, Marco, 2300 Turnhout (BE)
(74) Representative: Plas, Axel Ivo Michel

(57) **Abstract**

A mobile game board (100) according to the invention comprises:
- a piecewise foldable or flexible substrate whereon a game board layout is printed;
- one or more NFC antenna (101, 102), integrated in the substrate, for receiving/transmitting radio signals from/to a smart mobile device (201) with NFC interface, and for receiving/transmitting radio signals from/to a game component (202, 203) with NFC tag.

The NFC antenna(s) (101, 102) extend the radio signals received from the smart mobile device (201) and/or the game component (202, 203).

## Description

### Field of the Invention

The present invention generally relates to a mobile or portable game board for playing a board game, typically a game played with cards, miniatures, pawns or other game components that are positioned on or moved along the game board. Multiple players can play together and have a social experience, e.g. at home or in a pub. The invention in particular concerns an improved mobile game board that is able to recognize game components and that enables interaction with a smart mobile device through battery-less technology.

The invention concerns a new, cheap, portable, battery-less game board that can interact with a smartphone, or more generally with any smart mobile device with NFC (Near Field Communications) interface, like for instance a smartphone, an audio or media player, or tablet PC. The game board will use the on-board NFC technology of the smart mobile device.

### Background of the Invention

Traditionally, multi-player games like Monopoly, Risk, Trivial Pursuit, Risk, etc. involve a cardboard game board and dedicated game components like dice, cards, pawns, movers, figurines, paper money, a sand clock, etc. that are moved over the cardboard game board. People like the social, educational and tactile aspects of these classic multi-player games.

Interaction between a traditional cardboard game board and electronic devices like a smartphone, tablet PC, media player, etc. is not possible or it is expensive and not passive. Interaction between such cardboard game board and the different game components like cards, pawns, etc. exists but it is also expensive and not passive. A battery is required in solutions like for instance the GameChanger and the Epawn Arena advertised at the following URLs:
http://www.boardgamechanger.com
http://www.epawn.fr

Usually, it is also impossible to guide or instruct the players during the game, to introduce unexpected game elements, e.g. in a random battle mode, to visualize evolution of a game component - typically, a second stage card is needed to visualize evolution of a monster- and/or to memorize scores and game status.

It is further known that electronic portable game consoles like Nintendo DS, DSi or 3DS, or Sony Playstation PSP or PSVita, etc., enable to play games wherein all game components are virtualized on small, portable, battery-operated devices.

Such electronic game consoles are battery operated and therefore need to be charged regularly. These consoles are rather expensive, ranging from 150 Euro to 400 Euro, and the tactile experience of throwing dice, moving pawns, ex-changing cards, etc. has disappeared because all game components are virtualized. Moreover, most of these game consoles are destined to single player game experience. They offer a limited play area that corresponds to the size of the touch screen.

Yvio has unsuccessfully attempted to commercialise a game kit consisting of a game board, an electronic console, SD-cards containing the games, and game components that interact with the electronic console through passive technology integrated in the game board. More information on Yvio is available at:
http://boardgamegeek.com/boardgame/40580/yvio

The electronic console from Yvio is a dedicated console equipped with LED bulbs, an SD card slot and a loudspeaker. It is not possible for game components to interact with a conventional smart phone or tablet PC.

United States patent application US 2011/0244964 A1 entitled "Mobile Communication Device and System" describes treasure hunt games or adventure hunt games wherein NFC tagged objects hold data that are adapted before or during game play through an NFC-capable mobile device, e.g. a smartphone, in order to introduce dynamics in the game scenario. This way, the health status of an enemy in a battle game can for instance be changed during the game.

Although US 2011/0244964 A1 suggests integrating NFC technology in game play, it does not concern game boards or the interaction between such a game board and game pieces.

United States Patent Application US 2012/0077593 A1 entitled "Methods, Apparatuses, and Computer Program Products for Using Near Field Communication to Implement Games & Applications on Devices" describes a game kit with game pieces and game accessories that are NFC tagged. The NFC tags can be active, i.e. battery-operated, or passive. The NFC tags are read by bringing an NFC-capable smartphone in proximity of the game piece/accessory. Thereupon, the NFC tagged game piece/accessory enables visualization of the game piece on the smartphone or interaction with a software application installed on the smartphone. Also the game board can be NFC tagged in US 2012/0077593 A1.

The solution disclosed in US 2012/0077593 A1 does not enable a traditional game experience wherein game components are moved over a game board, and in addition interaction exists with a conventional smart mobile device lying on the game board. The smart mobile device must be moved within the close vicinity of a game component, et most a few millimetres, or vice versa, the game component must be held in the close vicinity of the smartphone in order to obtain direct read-out of the NFC tag.

It is an objective of the present invention to disclose a game board that resolves the above mentioned shortcomings of existing solutions. More precisely, it is an objective of the present invention to disclose a battery-less game board that enables interaction between game components and a conventional smart mobile device without requiring the players to move each game component towards the smart mobile device or vice versa thus sacrificing the traditional user experience of moving game components along the game board.

### Summary of the Invention

According to the present invention, the above identified objective is realized by a mobile game board as defined by claim 1, comprising:
- a piecewise foldable or flexible substrate whereon a game board layout is printed;
- one or more Near Field Communications or NFC antenna, integrated in the substrate, for receiving/transmitting radio signals from/to a smart mobile device with NFC interface, and for receiving/transmitting radio signals from/to a game component with NFC tag, said one or more NFC antenna being adapted to extend radio signals received in a first scanning area to a second scanning area, or vice versa.

Thus, the present invention basically foresees in a mobile game board made of a piecewise foldable cardboard or flexible substrate whereon a play board for a particular game is printed and wherein at least one passive antenna is integrated that enables battery-less interaction with a conventional smart mobile device, e.g. a smartphone, a tablet PC, or the like, and with game components like cards, pawns, figurines, etc. through Near Field Communication. The passive antenna(s) is/are made of copper wiring or an alternate conductive material. The passive NFC antenna(s) typically can sense NFC tagged items with a reach of a few millimeters and extend the radio signals received from such NFC tagged game component along the mobile game board to an area where a smart mobile device is located, or vice versa extend radio signals received from a smart mobile device along the mobile game board to an area where an NFC tagged game component is located.

The smart mobile device shall preferably be positioned with its back surface touching the game board and its touch screen facing upwards. The NFC antenna receives signals from the smart mobile device that lies on the game board through an NFC interface that is nowadays integrated in some smart mobile devices and in future is expected to be integrated in most smart mobile devices at or near the back surface of the smart mobile device. Such NFC interface is only a few millimeters away from the antenna in the mobile game board when the smart mobile device is correctly positioned on the game board. The NFC antenna in the current invention is referred to as "extension antenna". It extends radio signals received from the smart mobile device or from game components along the mobile game board. The technology to extend these radio signals is powerless, i.e. passive, and well-known.

A second, third, and further NFC antennas may be integrated in the game board and located in the game board to create plural scanning areas for one or more game components like card(s) or figurine(s) that are NFC tagged and that are positioned on or moved over the game board. Depending on the size/shape of the antenna(s), the complete game board surface or only part(s) of the game board surface will be able to sense presence of game components.

When a card or other game component is sensed, a game-specific software application installed on the smart mobile device will recognize the card or game component. Alternatively, the software application may reside on a web server and be accessible through the Internet in which case the software application need not be pre-installed on the smart mobile device. Under control of the software application, the smart mobile device can now display card specific visuals, can visualize evolution of the card, e.g. evolution of a Pokemon card, can introduce random elements in the game, e.g. an unpredictable element in a turn-based battle game, can explain the game, can instruct or guide players during the game at a speed that corresponds with game progress, e.g. player 1 is instructed to select an attack card while player 2 is instructed to select a defense card, can memorize game status and maintain game administration like scores, e.g. the portfolio of attack points, life points, defense points collected by a player. The software application can also understand where a component is located when plural NFC antennas are integrated in the game board. The smart mobile device can eventually also write or store information onto the card or game component.

Optionally, as defined by claim 2, the mobile game board according to the present invention further comprises:
- a first marking for indicating the location of the first area where the smart mobile device is preferably held to interact with the mobile game board.

Indeed, the antenna(s) will be located in the mobile game board at a location or will extend to a location in the mobile game board where the smart mobile device needs to be positioned during the game in order to be able to interface with the mobile game board. In a preferred embodiment, this location will be marked on the game board in order to avoid misplacement of the smart mobile device.

Further optionally, as defined by claim 3, the mobile game board according to the present invention further comprises:
- a second marking for indicating the location of the second area where a game component is preferably held to interact with the mobile game board.

Indeed, depending on the size/shape of the antenna(s), the complete game board surface or only part(s) of the game board surface will be able to sense presence of game components. The part(s) of the game board surface that are able to sense the presence of game components preferably are marked to avoid misplacement of game components during the game.

According to yet another optional aspect, defined by claim 4, the mobile game board according the present invention may comprise:
- a chip and a third marking on its external surface for indicating a location where the smart mobile device is preferably held to automatically trigger download and installation of a game specific software application before starting the game.

Indeed, optionally, a chip may be integrated in the game board and marking(s) may indicate on the external surface of the game board where the smart mobile device must be held in order to automatically activate download and installation of a game-specific software application on the smart mobile device. This must be done at a point in time where the smart mobile device has network connectivity, e.g. through WiFi, 3G, 4G, etc., and the location must not coincide with the location where the smart mobile device is located during the game as this would cause interference with the game.

In a preferred embodiment of the mobile game board according the present invention, the one or more NFC antenna is/are invisibly integrated as defined by claim 5.

Invisible integration of antenna(s) in the mobile game board may be achieved by appropriate printing of the game board layout on the mobile game board's surface.

In accordance with an optional aspect of the present invention, defined by claim 6, the mobile game board may comprise at least one printed switch enabling to activate the one or more NFC antenna when closed and to deactivate the one or more NFC antenna when opened.

This way, the first scanning area and the second scanning area will become active and read NFC signals from a game component and/or smart mobile device only when the printed switch is closed. Thus, even if an NFC tagged game component, e.g. a card, is lying on the game board, the user is given control via the printed switch on when the game component shall be read by the mobile game board. Only when the user is pressing the printed switch, read-out will take place.

In addition to a mobile game board as defined by claim 1, the present invention also relates to a game specific software application as defined by claim 7, adapted to be installed on a smart mobile device to enable said smart mobile device to interact with the mobile game board according to the invention.

In accordance with an optional aspect of the present invention, defined by claim 8, the game specific software application comprises instructions to enable the smart mobile device to request a specific player to move a game component into a specific portion of the second scanning area, and instructions to enable the smart mobile device to assume detection of the game component in the specific portion of the second scanning area as soon as the game component is sensed.

This way, the software application determines or assumes where each card or other game component is located on the game board. In case plural NFC antennas are integrated in the mobile game board, the hardware may enable the software application to discriminate between different scanning areas on the game board and actually sense where a particular game component is located on the board. This is however not the case when a single NFC antenna is integrated in the mobile game board. When only one NFC antenna is used to extend signals received from game components or vice versa from the smart mobile device, it is not possible for the mobile game board to determine where on the game board a particular component is positioned. In such case, user guidance by the software application, e.g. though user interface instructions specifying in which area on the mobile game board a component must be positioned, can assist and allow the software application to assume where a particular game component, e.g. a particular card, is located. Such knowledge may be useful in further game control and guidance.

The present invention further relates to a game component with NFC tag as defined by claim 9, adapted to interact with the mobile game board according to the present invention.

Preferably, as defined by claim 10, the NFC tag is invisibly integrated in the game component according to the present invention.

In addition, the present invention relates to a game kit as defined by claim 11, comprising:
- a mobile game board according to the present invention;
- a game-specific software application according to the present invention; and
- one or more game components according to the present invention.

### Brief Description of the Drawings

Fig. 1 illustrates an embodiment of the mobile game board according to the present invention; and

Fig. 2 illustrates an embodiment of a mobile game board, software application and game components that form part of a game kit according to the present invention.

### Detailed Description of Embodiment(s)

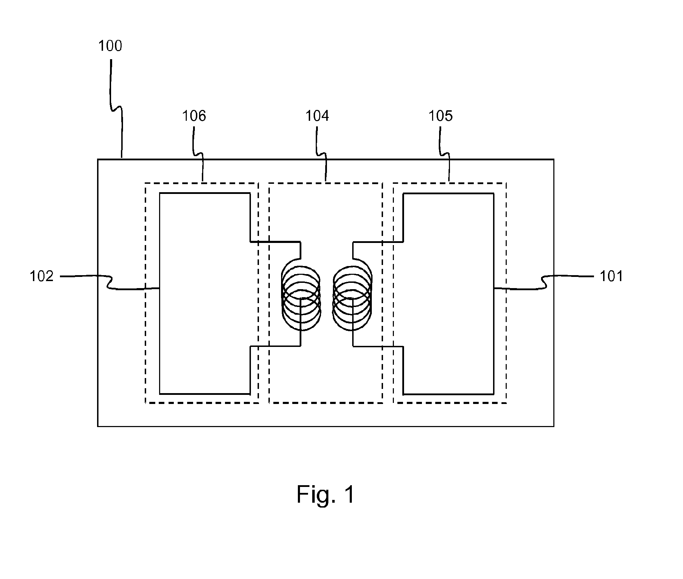

Fig. 1 shows a portable game board 100 that consists of a cardboard substrate wherein a first NFC antenna 101 is integrated and a second NFC antenna 102 is integrated. The first and second NFC antennas 101 and 102 will enable interaction with a smartphone equipped with NFC interface. Interaction becomes possible when the smartphone is held close to a first scan area of the mobile game board 100. Therefore, the area where the smartphone must be positioned during the game is visibly marked on the game board 100 through marking 104. The first and second NFC antennas 101 and 102 further enable interaction with game components such as cards, pawns, etc. that are equipped with NFC tags. Also these game components must be held close to the mobile game board to enable interaction, preferably in or near second scan areas. Therefore, the second scan areas wherein the game components must be positioned in order to enable interaction are marked through additional visible marks 105 and 106 on the game board 100.

When game components that are NFC tagged are moved within the second areas 105 or 106, the game board 100 will be able to sense the presence thereof via the antennas 101 or 102. The NFC signals sensed by the antennas 101 and 102 are extended by these antennas as a result of which the NFC interface of the smartphone shall be informed on the presence of the game components as well as an identification of these components. This information, the presence of certain game components and the identification thereof can then be used in game apps installed on the smartphone.

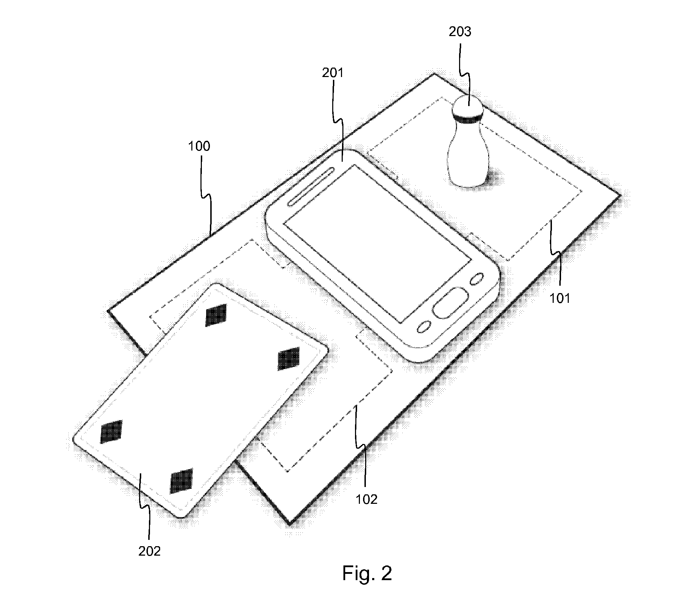

Fig. 2 again shows the portable board 100 of Fig. 1 wherein the first and second antennas 101, 102 are integrated. A smartphone 201 is lying within the area 104. The smartphone 201 has an NFC interface near its back surface that is only a few millimetres away from the NFC antennas. A game card 202 is lying in the area 106 and a pawn 203 is positioned in the area 105. The game card 202 and the pawn 203 are NFC tagged as a result of which they can be recognized respectively by the antennas 102 and 101. The NFC signals are extended by the antennas along the mobile game board and reach the NFC interface of the smartphone 201. On the smartphone 201, a game-specific application is installed. This application is either pre-installed on the smartphone or it is downloaded from a server, website or app store by the user of the smartphone 201. Download and installation of the app may be semi-automated, e.g. the first time an NFC tagged game component of the game kit is sensed. Download an installation of the application on the smartphone may also be automated by integrating a chip in the game board. The location where the chip is integrated may be marked, e.g. on the exterior surface of the game board, such that the user can hold his smartphone near the chip before unfolding the game board to trigger automated download and installation of the app. Under control of the application, the smartphone can display card specific visuals, can visualize evolution of the card or a character shown on the card, can introduce new elements in the game, can explain the game, can instruct or guide players, can memorize game status and maintain game administration.

In the opposite direction, the smartphone's NFC interface can be used to transfer information via the first and second antennas 101,102 onto the card 202 or onto the pawn 203.

Summarizing, the invention introduces a low cost portable game board that can interact with a smartphone and game components. The technology used thereto is passive as a result of which no battery is needed. Game players still enjoy the social and tactile experience of handling game components manually along a game board, while a commonplace smartphone equipped with NFC interface can be used for game administration, guidance, instructions, evolution, random elements, ... There is no risk for damage of the smartphone display when the NFC interface is located at the back of the smartphone since the display must not be held against the game board and opposite to the existing solution from Nokia, no game components must be held against the smartphone.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A mobile game board (100) comprising:
- a piecewise foldable or flexible substrate whereon a game board layout is printed;
- one or more Near Field Communications or NFC antenna (101, 102), integrated in said substrate, for receiving/transmitting radio signals from/to a smart mobile device (201) with NFC interface, and for receiving/transmitting radio signals from/to a game component (202, 203) with NFC tag, said one or more NFC antenna (101, 102) being adapted to extend radio signals received in a first scanning area to a second scanning area, or vice versa.

2. A mobile game board (100) according to claim 1, further comprising:
- a first marking (104) for indicating the location of said first area where said smart mobile device (201) is preferably held to interact with said mobile game board (100).

3. A mobile game board (100) according to one of the preceding claims, further comprising:
- a second marking (105, 106) for indicating the location of said second area where said game component (202, 203) is preferably held to interact with said mobile game board (100).

4. A mobile game board (100) according to one of the preceding claims, further comprising:
- a chip and a third marking on its external surface for indicating a location where said smart mobile device (201) is preferably held to automatically trigger download and installation of a game specific software application before starting the game.

5. A mobile game board (100) according to one of the preceding claims, wherein said one or more NFC antenna (101, 102) are invisibly integrated.

6. A mobile game board (100) according to one of the preceding claims, further comprising at least one printed switch enabling to activate said one or more NFC antenna when closed and to deactivate said one or more NFC antenna when opened.

7. A game specific software application adapted to be installed on a smart mobile device (201) to enable said smart mobile device (201) to interact with a mobile game board (100) as defined by any of claims 1 to 5.

8. A game specific software application according to claim 7, said game specific software application comprising instructions to enable said smart mobile device (201) to request a specific player to move a game component into a specific portion of said second scanning area, and comprising instructions to enable said smart mobile device (201) to assume detection of said game component in said specific portion of said second scanning area as soon as said game component is sensed.

9. A game component (202, 203) with NFC tag adapted to interact with a mobile game board (100) as defined by any of claims 1 to 6.

10. A game component (202, 203) according to claim 9, wherein said NFC tag is invisibly integrated.

11. A game kit comprising:
- a mobile game board (100) as defined by one of claims 1 to 6;
- a game specific software application as defined by one of claims 7 to 8; and
- one or more game components (202, 203) as defined by one of claims 9 to 10.
